# EUROPEAN PATENT APPLICATION

(11) **EP 2 682 670 A1**
(43) Date of publication of application: **08.01.2014**
(21) Application number: 12755753.6
(22) Date of filing: 16.02.2012
(51) Int. Cl.: F21S 2/00, F21V 23/00, G01N 21/84, F21Y 101/02

(54) **LINEAR LIGHT IRRADIATION DEVICE**

(30) Priority: 04.03.2011 JP 2011048240
(71) Applicant: CCS Inc., Kyoto-shi, Kyoto 602-8011 (JP)
(72) Inventor: SUZUKI, Ryoko, Kyoto-shi Kyoto 602-8011 (JP); MIURA, Kenji, Kyoto-shi Kyoto 602-8011 (JP)
(74) Representative: Müller - Hoffmann & Partner
(86) International application number: PCT/JP2012/053665
(87) International publication number: WO 2012/120988

(57) **Abstract**

The present invention is intended to allow to make a width of an LED wiring substrate compact and reduce the number of assembly parts and assembly man-hours, wherein each LED wiring substrate 3 includes: a plurality of LEDs 31 provided in a line shape along a longitudinal direction; and power-feeding line members 32a, 32b provided in parallel with the plurality of LEDs 31, wherein the power-feeding line members 32a, 32b are provided above an LED mounting surface 3b of the LED wiring substrate 3, and in the adjacent LED wiring substrates 3, the power-feeding line members 32a, 32b provided in one of the LED wiring substrates 3 include contact terminals 32a, 32b provided to extend outward in a longitudinal direction and contact with the power-feeding line members 32a, 32b of the other LED wiring substrate 3.

## Description

### Technical Field

### Background Art

In recent years, there have been many integrated circuits which are low-voltage driven and an output voltage required for a switching power supply device is also being lowered in voltage. As a result, a specification of a power supply device has a tendency to be lower in voltage but larger in current, and in order to suppress an electric resistance of not only an output circuit of the power supply device but also each current path inside the power supply device, a bus bar (power-feeding member) is used as a conductive member having a necessary but not a sufficient cross-section area, as shown in Patent Literature 1.

And the present applicant considers to provide a bus bar on each LED wiring substrate in a line light irradiation device having a plurality of substantially long sized LED wiring substrates and a casing for accommodating the LED wiring substrates. It is noted that, in an LED wiring substrate without using a bus bar, since a width of the LED wiring substrate is restricted to an accommodation width of a casing, the power-feeding line becomes thin and there may arise a problem that the line may be burned and disconnected in the case where required electric capacity becomes larger.

Conventionally, connection of bas bars provided on the LED wiring substrates is performed by co-fastening the end portions of the bus bars of the adjacent LED wiring substrates with screw members via a connection plate (for example, copper plate) having conductivity at each end portion.

However, in a structure of co-fastening with screw members, there is a problem that the number of parts such as connection plate and screw member etc. is increased and the number of assembling man-hours is increased. Further, in a configuration that the end portions of the bus bar of the adjacent LED wiring substrates are connected to each other via the connection plate, there is a problem that the connection becomes difficult in the case where a position of a screw hole formed in the bus bar and a position of a screw hole of the connection plate are displaced at the time of connection, the connection becomes difficult. In the assembly of connecting the connection plate to the bus bar after fixing the LED wiring substrate to the casing, there is a problem that a working space for connecting the bus bar is narrow and workability becomes extremely bad.

### Citation List

### Patent Literature

Patent Literature 1: JP-A2000-252664

### Summary of Invention

### Technical Problem

Therefore, the present invention has been made in order to solve the above problem at a stroke and a main expected object thereof is to allow to make a width of an LED wiring substrate compact and to reduce the number of assembly parts and assembly man-hours.

### Solution to Problem

That is, a line light irradiation device according to the present invention is a light irradiation device comprising a plurality of substantially long-sized LED wiring substrates arranged in a longitudinal direction, each of the LED wiring substrates including: a plurality of LEDs provided in a line shape along the longitudinal direction; and power-feeding line members provided in parallel with an arrangement direction of the plurality of LEDs for supplying electric power to the plurality of LEDs, wherein the power-feeding line members are provided above an LED mounting surface of each of the LED wiring substrates, and in the adjacent LED wiring substrates, the power-feeding line members provided in one of the adjacent LED wiring substrates include contact terminals provided to extend outward in the longitudinal direction and contact with the power-feeding line members of the other LED wiring substrate. Here, the phrase "provided to extend outward in the longitudinal direction" means that the contact terminals are protruding outward the LED wiring substrate in plan view.

With a configuration like this, since the power-feeding line member is provided above the LED mounting surface, the power-feeding line member can be made thick in accordance with a required electric capacity irrespective of a width of the LED wiring substrate, and the width of the LED wiring substrate can be made compact. In addition, since the contact terminals provided in the power-feeding line members provided in one of the adjacent LED wiring substrates contact with the power-feeding line members of the other LED wiring substrate, parts of a connection plate and a screw member required for a co-fastening structure can be made unnecessary, and the number of parts can be reduced. Further, since the power-feeding line members of the adjacent LED wiring substrates are electrically connected to each other by the contact terminals, the number of assembling man-hours can be also reduced.

It is desirable that the contact terminals are integrally formed with the power-feeding line members and elastically deformed to be pressed in contact with the power-feeding line members of the adjacent LED wiring substrate. With this, since the power-feeding line members and the contact terminals are integrally formed, the number of parts of the LED wiring substrate can be reduced and the number of assembling man-hours of the LED wiring substrate can be also reduced. Further, since the contact terminals are elastically deformed to be pressed in contact with the power-feeding line members, the electric contact between the power-feeding line members of the adjacent LED wiring substrates can be surely performed.

It is desirable to provide a casing having a bottom wall part extending in the longitudinal direction and a pair of left and right side wall parts extending upward from both sides in the longitudinal direction of the bottom wall part, with the plurality of LED wiring substrates being arranged on the bottom wall part, wherein, by fixing the plurality of LED wiring substrates to the bottom wall part, the contact terminals are elastically deformed to be pressed in contact with upper surfaces of the power-feeding line members of the adjacent LED wiring substrate. With this, at the same time of fixing the LED wiring substrate to the bottom wall part, a power caused by the fixing can be effectively used and the contact terminals can be surely brought into contact with the power-feeding line members of the adjacent LED wiring substrate.

It is desirable that one of the pair of power-feeding line members has the contact terminal at one end part in the longitudinal direction and the other of the pair of power-feeding line members has the contact terminal at the other end part in the longitudinal direction. With this, the structure of each LED wiring substrate can be commonly shared and the number of parts can be reduced. Further, since a reaction force (force leaving from the bottom wall part) received by pressing one of the power-feeding line members in contact with the power-feeding line member of the adjacent LED wiring substrate and a force (force toward the bottom wall part) which the other power-feeding line members receive from the contact terminals of the power-feeding line members of the adjacent LED wiring substrate counteract as cancelling each other, the LED wiring substrate can be stably fixed.

Further, it may be also considered that each of the pair of power-feeding line members has the contact terminal at one end part in the longitudinal direction. With this, the structure of each LED wiring substrate can be commonly shared and the number of parts can be reduced, and in the case where some of the plurality of LED wiring substrates accommodated in the casing are exchanged, it can be made easy to exchange.

In order to effectively use both sides of the plurality of LEDs to be able to withstand larger current in the LED wiring substrate, it is desirable that the power-feeding line members are paired so as to interpose the plurality of LEDs therebetween.

It is desirable that the power-feeding line members are fixed with screws to a surface implementing spacer soldered to the LED mounting surface of the LED wiring substrate. With this, the power-feeding line members can be made detachable with respect to the LED wiring substrate and the power-feeding line members can be variously exchanged.

### Advantageous Effects of Invention

According to the present invention like this, the width of the LED wiring substrate can be made compact and the number of assembly parts and number of assembling man-hours can be reduced.

### Brief Description of Drawings

[Fig. 1] Fig. 1 is a perspective view showing a line light irradiation device of the present embodiment.
[Fig. 2] Fig. 2 is a cross sectional view of the line light irradiation device of the same embodiment.
[Fig. 3] Fig. 3 is a partially expanded sectional view showing details of a fixing mechanism of the same embodiment.
[Fig. 4] Fig. 4 is a cross sectional view of an LED wiring substrate of the same embodiment.
[Fig. 5] Fig. 5 is a side view of the LED wiring substrate of the same embodiment.
[Fig. 6] Fig. 6 is a plan view of the LED wiring substrate of the same embodiment.
[Fig. 7] Fig. 7 is a perspective view of the LED wiring substrate of the same embodiment.
[Fig. 8] Fig. 8 is a plan view showing a modification of an LED wiring substrate.
[Fig. 9] Fig. 9 is a plan view showing a modification of the LED wiring substrate.
[Fig. 10] Fig. 10 is a plan view showing a modification of the LED wiring substrate.
[Fig. 11] Fig. 11 is a plan view showing a modification of the LED wiring substrate.
[Fig. 12] Fig. 12 is a schematic diagram showing a modification of a contact terminal.
[Fig. 13] Fig. 13 is a side view showing a modification of the LED wiring substrate.
[Fig. 14] Fig. 14 is a side view showing a modification of the LED wiring substrate.

### Reference Signs List

100 ... Line light irradiation device
2 ... Casing
21 ... Bottom wall part
22, 23 ... Side wall part
3 ... LED wiring substrate
31 ... LED
3b ... LED mounting surface
32a, 32b ... Power-feeding line member
321a, 321b ... Contact terminal
33 ... Surface implementing spacer

### Description of Embodiments

Next, one embodiment of a line light irradiation device 100 according to the present invention is described referring to drawings.

The line light irradiation device 100 according to the present embodiment is adapted to irradiate line shaped light to, for example, a predetermined irradiation region of an inspection object (work) and it is used for such as a product inspection system etc. which photographs the predetermined irradiation region with a photographing device (not shown), captures obtained image data with an image processing device (not shown) to perform an automatic inspection of checking presence or absence of a defect such as, e.g., a crack or dirt, a foreign matter in liquid, or mark inspection.

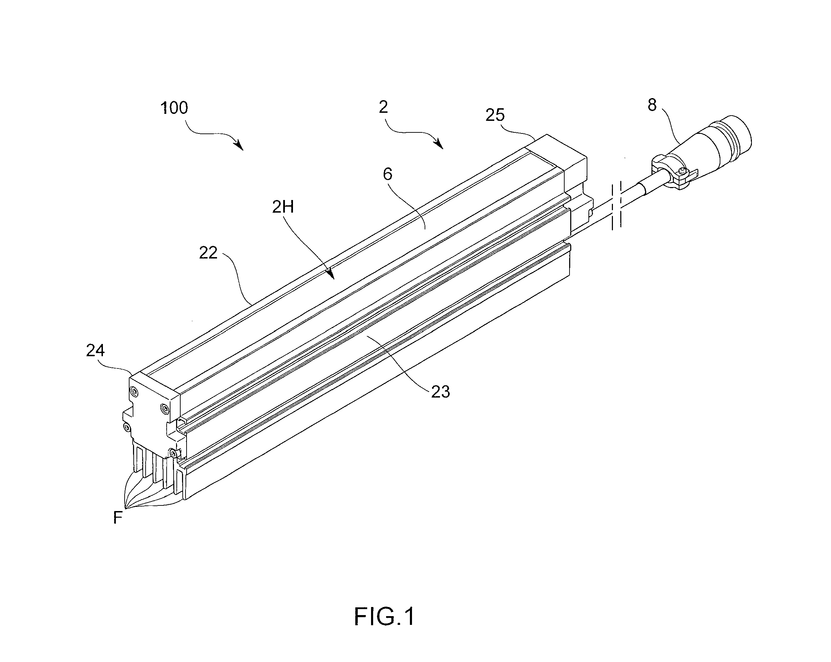

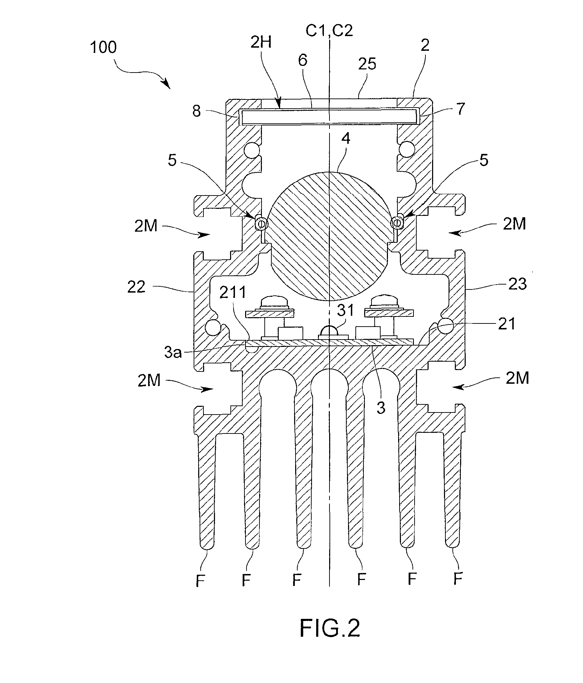

Specifically, as shown in Figs. 1 and 2, this device is provided with: a casing 2; a LED substrate 3 accommodated in the casing 2; a rod lens 4 which is a rod-like lens accommodated in the casing 2; and a fixing mechanism 5 for fixing the rod lens 4 to the casing 2.

As shown in Fig. 2, the casing 2 is adapted to accommodate the LED substrate 3, rod lens 4 and a light transmission plate 6 such as a diffusion plate and a protection cover. Specifically, the casing 2 is long sized metal one and is formed in a generally U-character shape in section perpendicularly intersecting in a longitudinal direction (extending direction), and includes a bottom wall part 21 extending in the longitudinal direction and a pair of left and right side wall parts 22 and 23 extending upward from longitudinal-directed both sides of this bottom wall part 21. This casing 2 is integrally formed one by extrusion molding or pultrusion molding, and on a back surface of the bottom wall part 21, there are provided plural sheets of radiator fins F along the longitudinal direction for radiating heat to the outside from the LED substrate 3. Further, in the bottom wall part 21, and left and right side wall parts 22 and 23, there are provided attachment grooves 2M for attaching the line light irradiation device 100 to an external member (e.g., rack etc.). Further, front and rear side walls 24 and 25 are fixed to one end and the other end in the longitudinal direction of the casing 2 with screws and the like. Thus, the casing 2 is formed with a generally rectangular shaped light outgoing port 2H in the upper part thereof. In addition, an electrical cable 8 is extended from the rear side wall 25 for supplying electric power to the LED.

The LED substrate 3 is a long sized substrate mounting a plurality of LEDs 31. Specifically, the LED substrate 3 is formed by machine-mounting the plurality of LEDs 31 to be arranged in one or more lines (one line in Fig. 2) in a shorted side direction on a surface of a long sized print circuit substrate so as to align optical axes C1 thereof in a generally constant direction to be in a straight line state in a longer side direction. The LEDs 31 are surface mount typed ones of arranging LED elements in a center of a package which forms, for example, a thin rectangular plate shape. Such LEDs 31 are arranged so as to arrange the LED elements, for example, at predetermined intervals in the longer side direction and shorter side direction, respectively.

This LED substrate 3 is fixed to an upper surface of the bottom wall part 21 of the casing 2. And regarding this LED substrate 3, a longer side direction side surface 3a of the LED substrate 3 contacts with a substrate contacting surface 211 which is a substrate positioning structure provided along the longitudinal direction on the bottom wall part 21, and the LED substrate 3 is thereby positioned to the casing 2 in a lateral direction (a direction perpendicular to the longitudinal direction).

The rod lens 4 is a condenser lens of a generally circular shape with an equal cross-section having a generally same length as a length of each of the left and right side walls 22 and 23 of the casing 2. This rod lens 4 is provided along the longitudinal direction above the LED substrate 3 inside the casing 2 and is fixed to be in a predetermined position with respect to the plurality of LEDs 31 mounted on the LED substrate 3 by a fixing mechanism 5 to be described later. Specifically, the rod lens 4 is fixed by the fixing mechanism 5 in a manner such that an optical axis C2 of the rod lens 4 coincides with the optical axes C1 of the plurality of LEDs 31 and that the rod lens 4 is spaced a predetermined distance with respect to the plurality of LEDs 31. In addition, the light transmission plate 6 such as a diffusion plate and a protection cover is provided in a front (upper portion) in a light outgoing side of the rod lens 4, and since this light transmission plate 6 is thermally expanded, it is attached by a slide groove 7 with a slight play formed in an inner surface of each of the left and right side walls 22 and 23.

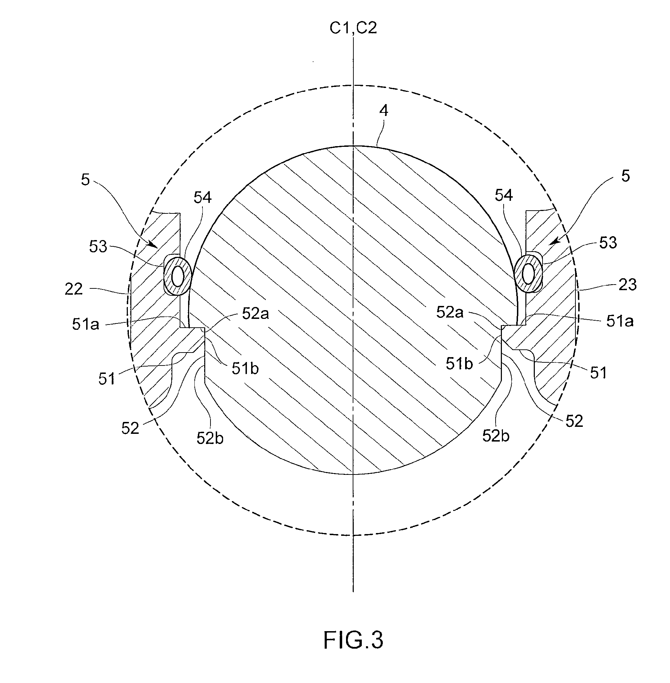

As shown in Fig. 3, the fixing mechanism 5 is intended to fix the rod lens 4 to the pair of left and right side wall parts 22 and 23 of the casing 2, and it includes a projected rim part 51 provided along the longitudinal direction in an inner surface of each of the left and right side wall parts 22 and 23, two notch portions 52 provided along the longitudinal direction in side peripheral surfaces of the rod lens 4, a concave groove 53 provided along the longitudinal direction above the projected rim part 51 in the inner surface of each of the left and right side wall parts 22 and 23, and an elastic body 54 detachably provided in each of the concave grooves 53.

Especially, as shown in Fig. 3, each projected rim part 51 is provided to be projected inward from the inner surface and extending over from one end to the other end in the longitudinal direction of each of the left and right side wall parts 22 and 23, and it includes an upward surface 51a which is a generally horizontal plane and an inward surface 51b which is a plane generally perpendicular to the upward surface 51a. Further, the two projected rim parts 51 provided in the respective left and right side wall parts 22 and 23 have the same shape laterally symmetrical with respect to the optical axis C2. In addition, a distance between the upper side portions above the projected rim parts 51 in the pair of left and right side wall parts 22 and 23 is configured to be larger than the outer diameter of the rod lens 4 and configured to be able to accommodate the rod lens 4 from an upper opening of the casing 2. Thus, the accommodating work of the rod lens 4 into the casing 2 is facilitated.

Especially, as shown in Fig. 3, each notch potion 52 is formed to extend over from one end to the other end in the longitudinal direction in each of the side peripheral surfaces of the rod lens 4, and it includes a downward surface 52a which is a plane contacting with the upward surface 51a of the projected rim part 51 and an outward surface 52b which is a plane generally perpendicular to the downward surface 52a. The two notch portions 52 formed in the rod lens 4 have the same shape laterally symmetrical with respect to the optical axis C2.

And a distance between the inward surfaces 51b of the two projected rim parts 51 is generally identical to the distance between the outward surfaces 52b of the two notch portions 52, and the inward surfaces 51b of the projected rim parts 51 are in contact with the outward surfaces 52b of the notch portions 52 in a state that the upward surfaces 51a of the projected rim parts 51 are in contact with the downward surfaces 52a of the notch portions 52. Thus, the rod lens 4 can be positioned with respect to the casing 2 in the vertical direction as well as in the horizontal direction. That is, the optical axis C1 of each LED 31 on the LED substrate 3 positioned in the lateral direction with respect to the casing 2 coincides with the optical axis C2 of the rod lens 4 positioned in the lateral direction with respect to the casing 2.

The concave groove 53 is provided along the longitudinal direction above the projected rim part 51 to extend over from one end to the other end in the longitudinal direction in the inner surface of each of the left and right side wall parts 22 and 23. This concave groove 53 is formed in a manner such that the elastic body 54 is fit thereto in a state that the downward surface 52a of the notch portion 52 is in contact with the upward surface 51a of the projected rim part 51 and is formed in a position where the elastic body 54 contacts with the side peripheral surface of the rod lens 4.

The elastic body 54 is a linear tube having flexibility which is detachably provided in the concave groove 53 and which is a silicon tube excellent in heat resistance and corrosion resistance in the present embodiment. This elastic body is fit to the concave groove 53 in a state that the downward surface 52a of the notch portion 52 is in contact with the upward surface 51a of the projected rim part 51 and is brought into contact with the side peripheral surface of the upper side portion above the notch 52 in the rod lens 4 to thereby press the notch portion 52 to the projected rim part 51.

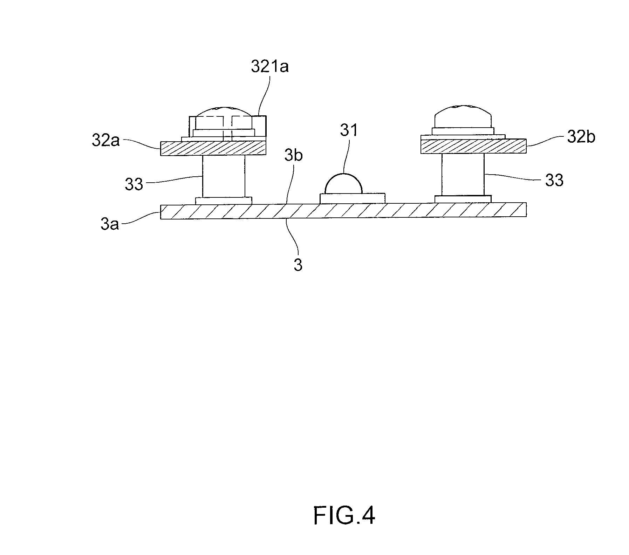

Thus, the plurality of LED wiring substrates 3 of the present embodiment are arranged in the longitudinal direction on an upper surface of the bottom wall part 21 of the casing 2, and as shown in Figs. 4 to 7, the plurality of LED wiring substrates 3 are provided in parallel with an arrangement direction of the plurality of LEDs 31 so as to interpose the plurality of LEDs 31 therebetween provided in a line shape along the longitudinal direction and have a pair of power-feeding line members 32a and 32b for supplying electric power to the plurality of LEDs 31.

The pair of power-feeding line members 32a and 32b are provided above an LED mounting surface (upper surface 3b of the wiring substrate) of the LED wiring substrate 3 so as to be separated from the LED mounting surface 3b, and each of the power-feeding line members 32a and 32b is formed to have a long-sized shape provided along each of the longitudinal side surfaces of the LED wiring substrate 3.

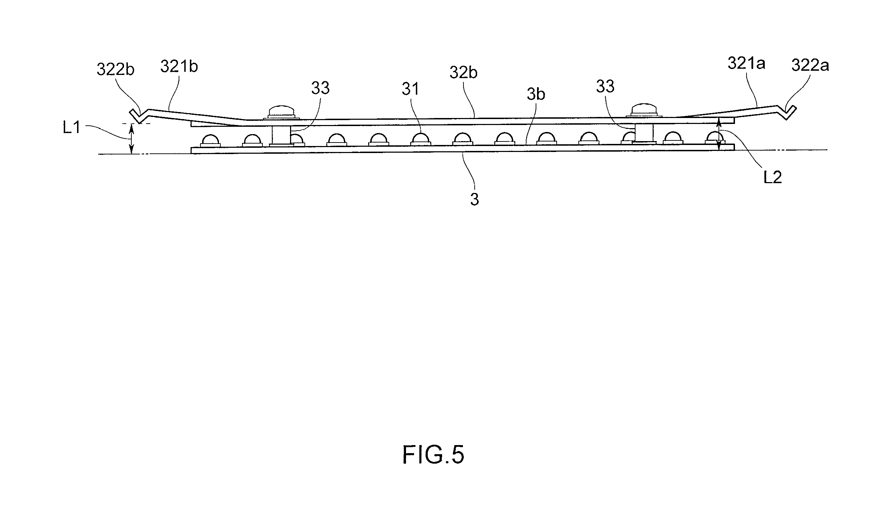

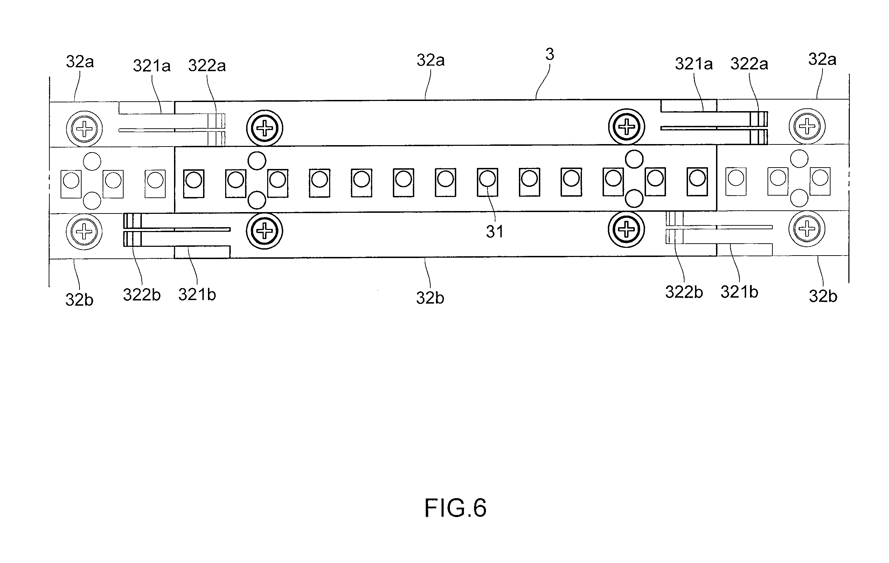

As shown in Figs. 5 and 6, each of the power-feeding line members 32a and 32b is formed of a conductive member such as, for example, copper plate and is fixed with screws to surface implementing spacers 33 soldered to the LED mounting surface 3b of the LED wiring substrate 3. It is noted that the pair of power-feeding line members 32a and 32b are electrically connected to a pattern wiring (not shown) provided on the LED wiring substrate 3 via the surface implementing spacers 33.

In addition, each of the power-feeding line members 32a and 32b is arranged between the longitudinal side surface of the LED wiring substrate 3 and the LEDs 31 in a transverse direction in plan view (see Figs. 4 and 6). Thus, it is possible to prevent a problem that the power-feeding line members 32a and 32b come into contact with the left and right side wall parts 22 and 23 to make the assembling work difficult at the time of accommodating the LED wiring substrate 3 in the casing 2. More preferably, the power-feeding line members 32a and 32b are arranged so as not to interrupt the light directly incident to the rod lens 4 from the LEDs 31. Thus, a light quantity loss of the LEDs 31 due to the power-feeding line members 32a and 32b can be prevented.

And as shown in Figs. 5 to 7, the power-feeding line member 32a (upper side power-feeding line member in Fig. 6) which is one of the two power-feeding line members 32a and 32b provided on each LED wiring substrate 3 includes contact terminals 321a each of which is a spring contact part extended outward in the longitudinal direction from one end part in the longitudinal direction. Also, the other power-feeding line member 32b (lower side power-feeding line member in Fig. 6) includes contact terminals 321b each of which is a spring contact part extended outward in the longitudinal direction from the other end part in the longitudinal direction. These contact terminals 321a and 321b are integrally formed with the power-feeding line members 32a and 32b and elastically deformed to be pressed in contact with the power-feeding line members 32a and 32b of the adjacent LED wiring substrate 3.

Further, the contact terminals 321a and 321b are provided to be slightly bent upward from the end parts of the power-feeding line members 32a and 32b, and there are formed contact portions 322a and 322b contacting with the power-feeding line members 32a and 32b adjacent to the tip end portions thereof. A distance L1 between the lower end portions of these contact portions 322a and 322b and the upper surface 3b of the LED wiring substrate 3 is set to be slightly smaller than a distance L2 between the upper surfaces of the power-feeding line members 32a and 32b and the upper surface 3b of the LED wiring substrate 3.

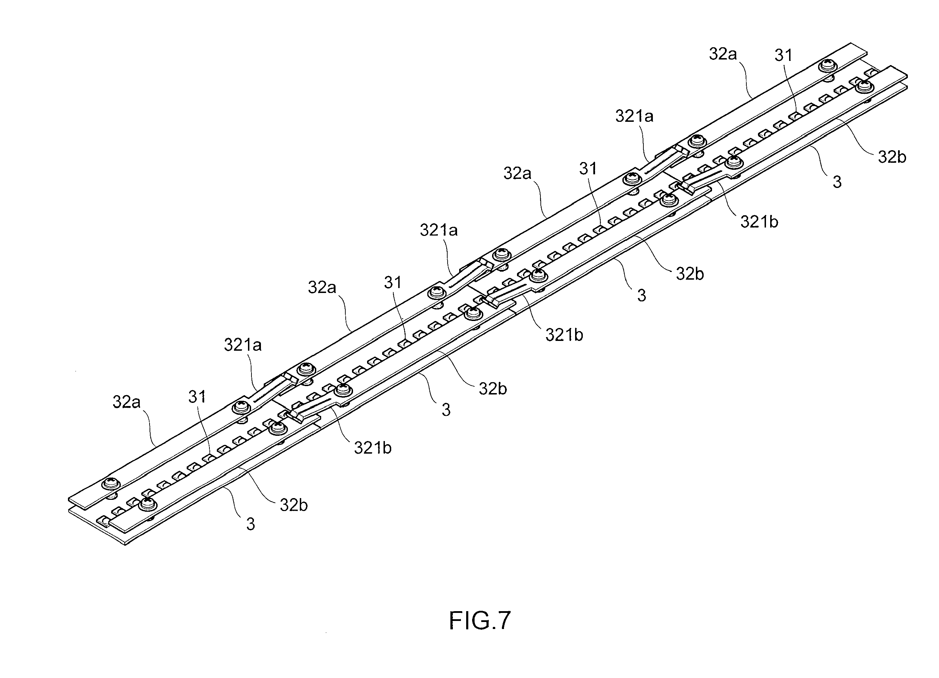

Specifically, as shown in Figs. 6 and 7, in a state of adjacently arranging the plurality of LED wiring substrates 3 in the longitudinal direction, the contact terminal 321a of the one side power-feeding line member 32a (upper side power-feeding line member) is pressed in contact with an upper surface of the other end portion (left side end portion in Fig. 6) in the longitudinal direction of the one side power-feeding line member 32a of the LED wiring substrate 3 adjacent to one side (right side in Fig. 6). Also, the contact terminal 321b of the other power-feeding line member 32b (lower side power-feeding line member) is pressed in contact with an upper surface of the one end portion (right side end portion in Fig. 6) in the longitudinal direction of the other power-feeding line member 32b (lower side power-feeding line member) of the LED wiring substrate 3 adjacent to the other side (left side in Fig. 6).

In more details, since the distance L1 between the contact portions 322a and 322b and the LED wiring substrate 3 is set to be slightly smaller than the distance L2 between the power-feeding line members 32a and 32b and the LED wiring substrate 3, in the case where the LED wiring substrate 3 is fastened with screws to the bottom wall part 21, the contact terminals 321a and 321b are elastically deformed and the contact portions 322a and 322b thereof are pressed in contact with an upper surface of the power-feeding line member of the adjacent LED wiring substrate 3. It is noted that, since a reaction force (force leaving from the bottom wall part 21) received by pressing the one side power-feeding line member 32a in contact with the power-feeding line member 32a of the adjacent LED wiring substrate 3 and a force (force toward the bottom wall part 21) which the other power-feeding line member 32b receives from the contact terminal 321b of the power-feeding line member 32b of the adjacent LED wiring substrate 3 counteract as cancelling each other, therefore it becomes possible to stably fix the LED wiring substrate 3.

It is noted that, as shown in Fig. 7, the LED wiring substrates 3 positioning at both end portions among the LED wiring substrates 3 adjacently arranged in the longitudinal direction are provided with the contact terminals 321a and 321b at the end portions of the power-feeding line members 32a and 32b only in the sides where the adjacent LED wiring substrates 3 exist. That is, the LED wiring substrates 3 positioning at both end portions among the plurality of LED wiring substrates 3 have mutually the same shape. Also, the other LED wiring substrates 3 except the LED wiring substrates 3 positioning at both end portions have mutually the same shape.

Next, an assembling procedure of the line light irradiation device 100 configured like this is described referring to Fig. 4.

First, pultrusion-molding or extrusion-molding is performed, and the plurality of LED wiring substrates 3 are accommodated in the casing 2 which has been subjected to a prescribed process for fixing the front and rear side walls 24 and 25 to both end portions. As a method of accommodating these LED wiring substrates 3, the LED wiring substrates 3 are accommodated in the casing 2 one by one. In the case of accommodating a 2nd LED wiring substrate 3 and thereafter, the accommodation is performed in a manner such that the contact terminal 321a (or 321b) of the previously accommodated LED wiring substrate 3 and the contact terminal 321b (or 321a) of the LED wiring substrate 3 to be accommodated are slid to be in contact with the upper surfaces of the power-feeding line members 32a and 32b, respectively. After all of the LED wiring substrates 3 are accommodate in this way, each LED wiring substrate 3 is fastened to the bottom wall part 21 with screws. Thus, the electrical connection of each LED wiring substrate 3 can be made sure. Then, the rod lens 4 is accommodated, for example, through an upper part opening of the casing 2. In a state of accommodating this rod lens 4 in the casing, the notch portion 52 of the rod lens 4 and the projected rim part 51 of the casing 2 are contacted, whereby the rod lens 2 is vertically and laterally positioned to the casing 2.

Then, the silicon tubes 54 formed of two elastic bodies are fit into the concave grooves 53 of the left and right side walls 22 and 23.

And after fitting the silicon tubes 54 to fix the rod lens 4, the light transmission plate 6 is slid to be attached to the sliding groove 7, and thereafter the rear side wall 25 is fastened to the left and right side walls 22 and 23 with screws to thereby assemble the line light irradiation device 100.

According to the line light irradiation device 100 according to the present embodiment configured like this, since the power-feeding line members 32a and 32b are provided above the LED mounting surface 3b, by making the power-feeding line members 32a and 32b thick irrespective of a width of the LED wiring substrate 3, it is possible to meet a required electric capacity, and the width of the LED wiring substrate 3 can be made compact. In addition, since the contact terminals 321a and 321b provided in the power-feeding line members 32a and 32b provided in one of the adjacent LED wiring substrates 3 are pressed in contact with the power-feeding line members 32a and 32b of the other LED wiring substrate 3, parts of a connection plate and a screw member required for a co-fastening structure can be made unnecessary, and the number of parts can be reduced. Further, since the power-feeding line members 32a and 32b of the adjacent LED wiring substrates 3 are electrically connected to each other by the contact terminals 321a and 321b, the number of assembling man-hours can be also reduced.

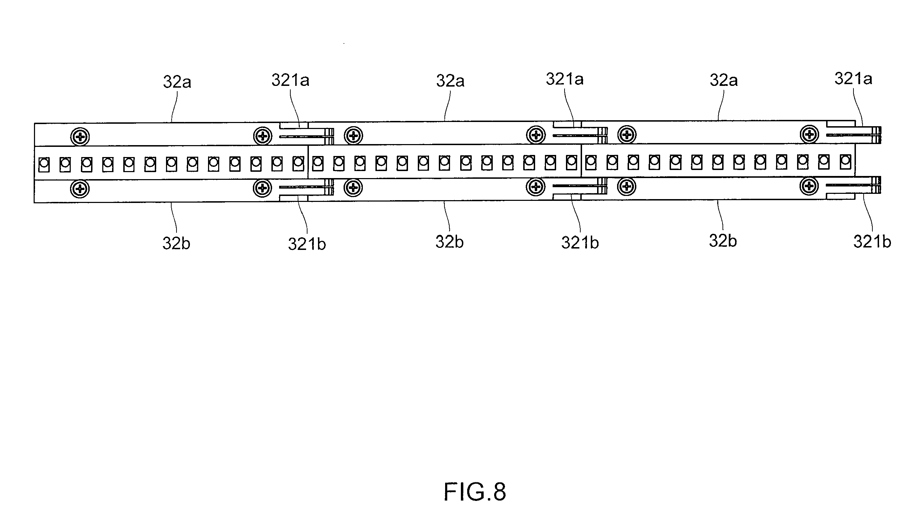

It is noted that the present invention should not be limited to the embodiment described above. For example, as shown in Fig. 8, it may be configured that the pair of power-feeding line members 32a and 32b respectively include the contact terminals 321a and 321b at one end portion (right side end portion in Fig. 8) in the longitudinal direction in each LED wiring substrate 3. With this, the structure of each LED wiring substrate 3 can be commonly shared and the number of parts can be reduced. Further, in the case where some LED wiring substrates 3 broken or the like are exchanged among the plurality of LED wiring substrates 3 accommodated in the casing 2, since there is no member contacting with one end portion in the longitudinal direction of the LED wiring substrate 3 from the upper part, the broken LED wiring substrates 3 can be easily exchanged by raising the one end portion in the longitudinal direction.

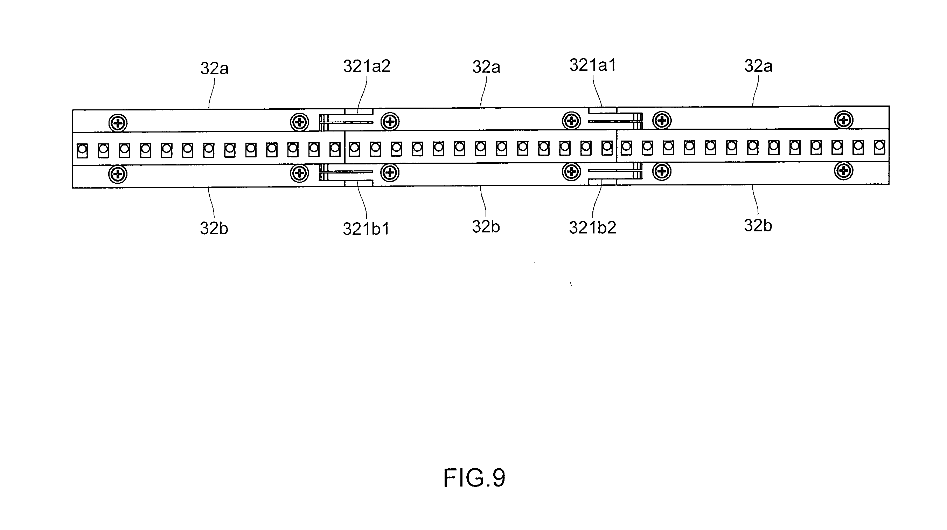

Further, as shown in Fig. 9, in such a case of arranging three LED wiring substrates, it may be configured that contact terminals 321a1, 321a2, 321b1 and 321b2 are provided at both end portions in the longitudinal direction of a pair of power-feeding line members 32 of the LED wiring substrate 3 which is positioned in the middle.

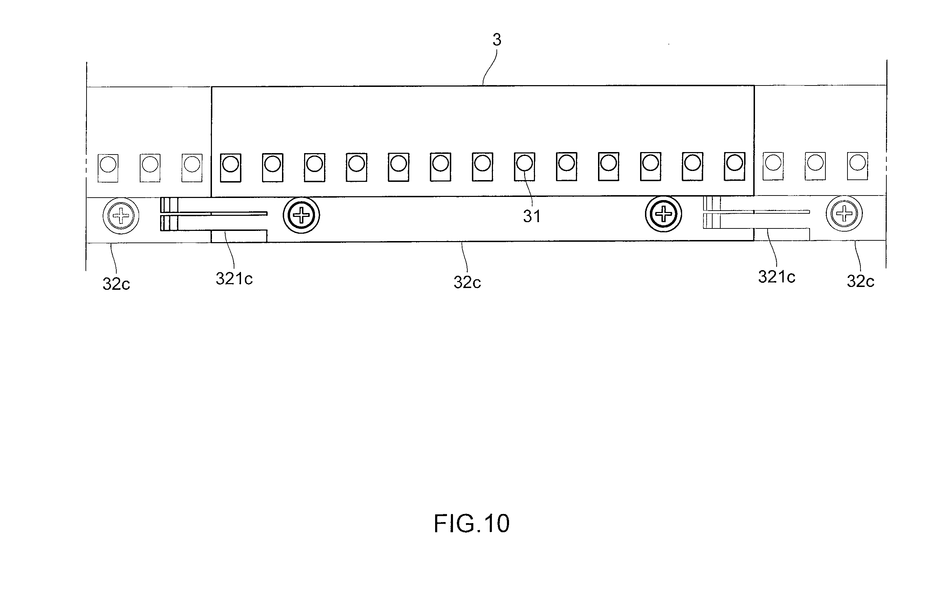

Further, in the embodiment, although an example of providing a pair of power-feeding line members on the LED wiring substrate is shown, it may be configured that one power-feeding line member 32c is provided on the LED wiring substrate 3 as shown in Fig. 10. In this case, the power-feeding line member 32c is provided in a side of one longitudinal side of the LED wiring substrate 3 so as to be in parallel with the arrangement direction of the plurality of LEDs 31. It is noted that, in Fig. 10, although there is shown an example of providing the contact terminal 321c at one end portion in the longitudinal direction of the power-feeding line member 32c, it may be configured the contact terminals are provided at both end portions in the longitudinal direction.

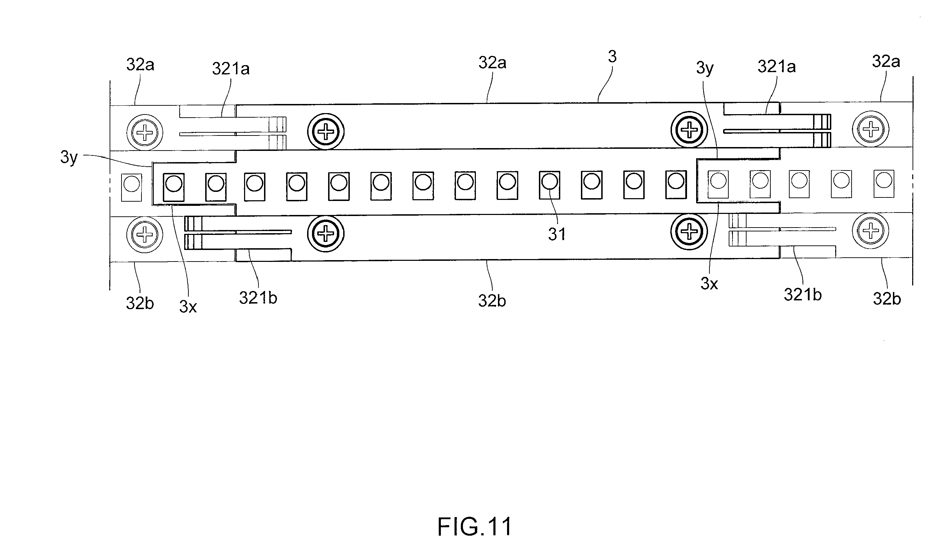

Moreover, as shown in Fig. 11, it may be configured to provide asperities in a side surface in the transverse direction of the adjacent LED wiring substrates 3. Specifically, a protruding part 3x is provided in a generally center portion of one side surface (left side surface in Fig. 11) in the transverse direction of the LED wiring substrate 3 and a concave part 3y is provided in a generally center portion of the other side surface (right side surface in Fig. 11) in the transverse direction. And the contact terminals 321a and 321b of the power-feeding line members 32a and 32b are protruded outward the LED wiring substrate 3 to thereby extend outward in the longitudinal direction. With this, in the case of arranging the adjacent LED wiring substrates 3, by arranging such that the protruding part 3x or concave part 3y provided in one LED wiring substrate 3 and the concave part 3y or protruding part 3x of the other LED wiring substrate 3 are fitted to each other, it becomes easy to arrange the LED wiring substrates while positioning the both of them.

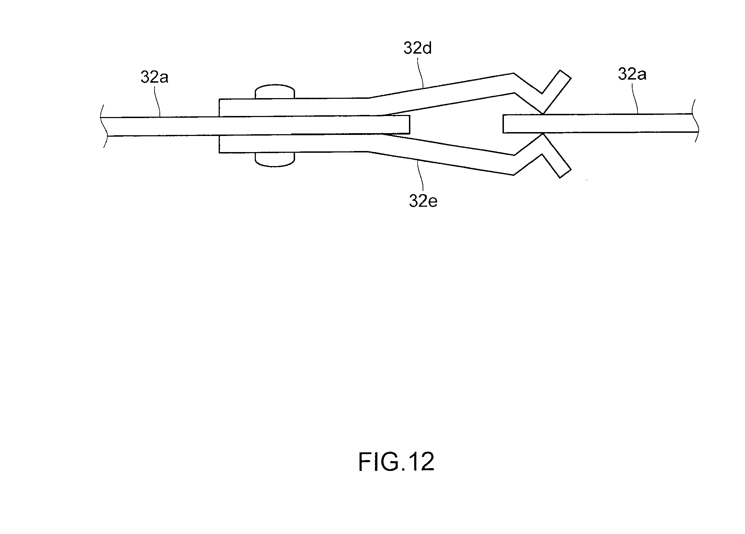

In addition, although the contact terminals of the embodiment are provided to be bent upward from the end portion of the power-feeding line member to be pressed in contact with the upper surface of the power-feeding line member of the adjacent LED wiring substrate, it is not limited to this. For example, as shown in Fig. 12, it may be considered to configure that an upper side contact terminal 32d is provided on an upper surface of an end portion of a power-feeding bus line 32a and a lower side contact terminal 32e is provided on a lower surface thereof so as to interpose the end portions of the power-feeding line members 32a of the adjacent LED wiring substrates 3 between the upper and lower two contact terminals 32d and 32e. This structure can be appropriately used for such as a large-sized line light irradiation device etc. and the electric contact of the adjacent LED wiring substrates 3 can be made much more reliable.

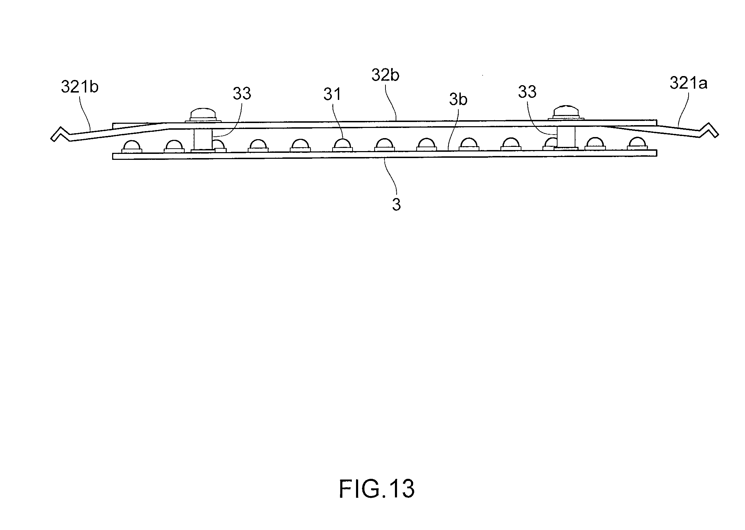

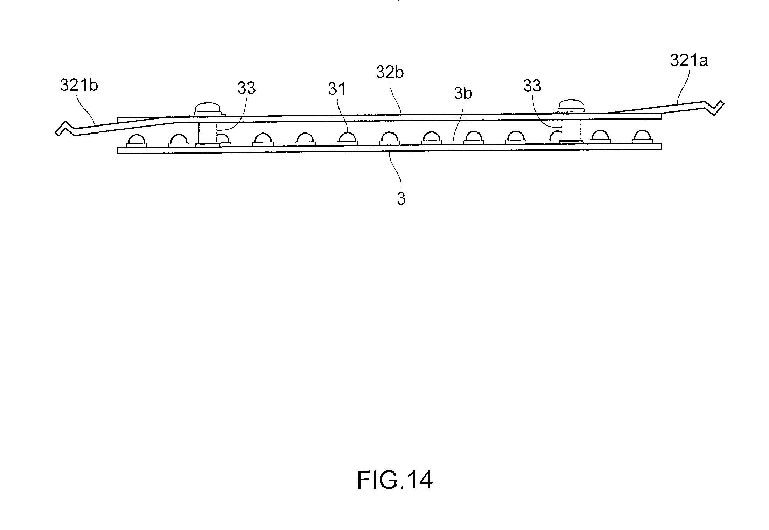

Furthermore, as shown in Fig. 13, it may be configured such that the contact terminals 321a and 321b are slightly bent downward from the end portions of the power-feeding line members 32a and 32b to be pressed in contact with the lower surfaces of the power-feeding members 32a and 32b of the adjacent LED wiring substrates 3. In such a configuration, a space thereof can be effectively utilized in such a case where a space between the upper surface of the LED wiring substrate 3 and the power-feeding line members 32a and 32b is comparatively vacant and the upper portions of the power-feeding line members 32a and 32b can be space-saved. Also, as shown in Fig. 14, a contact terminal provided at one end portion in the longitudinal direction may be bent downward and a contact terminal provided in the other end portion in the longitudinal direction may be bent upward.

In addition, it is needless to say that a part or a whole of the above described embodiments and modifications may be appropriately combined and the present invention is not limited to the above embodiments and various modifications may be made in a range unless deviated from the spirit thereof.

### Industrial Applicability

According to the present invention, a width of an LED wiring substrate can be made compact and the number of assembling parts and assembling man-hours can be reduces.

## Claims

1. A line light irradiation device comprising a plurality of substantially long-sized LED wiring substrates arranged in a longitudinal direction,
each of the LED wiring substrates including: a plurality of LEDs provided in a line shape along the longitudinal direction; and power-feeding line members provided in parallel with an arrangement direction of the plurality of LEDs for supplying electric power to the plurality of LEDs,
wherein the power-feeding line members are provided above an LED mounting surface of each of the LED wiring substrates, and in adjacent LED wiring substrates, the power-feeding line members provided in one of the adjacent LED wiring substrates include contact terminals provided to extend outward in the longitudinal direction and contact with the power-feeding line members of the other LED wiring substrate.

2. The line light irradiation device according to claim 1, wherein the contact terminals are integrally formed with the power-feeding line members and elastically deformed to be pressed in contact with the power-feeding line members of the adjacent LED wiring substrate.

3. The line light irradiation device according to claim 1 comprising a casing having a bottom wall part extending in the longitudinal direction and a pair of left and right side wall parts extending upward from both sides in the longitudinal direction of the bottom wall part, the plurality of LED wiring substrates being arranged on the bottom wall part,
wherein, by fixing the plurality of LED wiring substrates to the bottom wall part, the contact terminals are elastically deformed to be pressed in contact with upper surfaces of the power-feeding line members of the adjacent LED wiring substrate.

4. The line light irradiation device according to claim 1, wherein each of the pair of power-feeding line members has the contact terminal at one end part in the longitudinal direction.

5. The line light irradiation device according to claim 1, wherein one of the pair of power-feeding line members has the contact terminal at one end part in the longitudinal direction, and
wherein the other of the pair of power-feeding line members has the contact terminal at the other end part in the longitudinal direction.

6. The line light irradiation device according to claim 1, wherein the power-feeding line members are paired so as to interpose the plurality of LEDs therebetween.

7. The line light irradiation device according to claim 1, wherein the power-feeding line members are fixed with screws to a surface implementing spacer soldered to the LED mounting surface of the LED wiring substrate.
